# EUROPÄISCHE PATENTSCHRIFT

(11) **EP 2 657 578 B1**
(45) Veröffentlichungstag und Bekanntmachung des Hinweises auf die Patenterteilung: **16.11.2016**
(21) Anmeldenummer: 13161266.5
(22) Anmeldetag: 27.03.2013
(51) Int. Cl.: F16H 63/34, B60T 1/00

(54) **Parksperrenanordnung und Kraftfahrzeuggetriebe**
Parking lock assembly and a vehicle transmission
Ensemble de blocage de stationnement et boîte de vitesses de véhicule automobile

(30) Priorität: 02.04.2012 DE 102012007061
(43) Veröffentlichungstag der Anmeldung: 30.10.2013
(73) Patentinhaber: GETRAG Getriebe- und Zahnradfabrik Hermann Hagenmeyer GmbH & Cie KG, 74199 Untergruppenbach (DE)
(72) Erfinder: Burgardt, Georg, 74626 Bretzfeld (DE); Kapp, Stefan, 74399 Walheim (DE)
(74) Vertreter: Witte, Weller & Partner Patentanwälte mbB

(56) Entgegenhaltungen:
- DE-A1-102010 027 826
- DE-U1-202008 001 760
- GB-A- 2 467 378

## Beschreibung

Die vorliegende Erfindung betrifft eine Parksperrenanordnung für ein Kraftfahrzeuggetriebe gemäß dem Oberbegriff des Anspruchs 1, mit einem um eine erste Achse drehbar gelagerten Parksperrenrad, mit einer zwischen einer Sperrposition und einer Freigabeposition beweglich gelagerten Parksperrenklinke und mit einer die Park-sperrenklinke betätigenden Betätigungsanordnung, die um eine zweite Achse über einen Winkelbereich verdrehbar gelagert ist.

Ferner betrifft die vorliegende Erfindung ein Kraftfahrzeuggetriebe mit einer derartigen Parksperrenanordnung.

Eine Parksperrenanordnung der oben genannten Art ist aus dem Dokument DE 20 2008 001 760 U1 bekannt. Hier ist die Parksperrenklinke um eine weitere Achse zwischen einer Sperrposition und einer Freigabeposition verschwenkbar gelagert.

Die Betätigungsanordnung beinhaltet dabei eine Führungseinrichtung, die an einer Betätigungswelle angeordnet ist und die einen exzentrisch zu der Betätigungswelle ausgebildeten Führungsabschnitt aufweist. Ferner ist an der Betätigungswelle ein Nocken vorgesehen, mittels dessen die Sperrklinke in der Sperrposition gehalten werden kann. Die Betätigungswelle ist mittels eines Aktuators oder eines Parksperrenschaltmechanismus begrenzt verdrehbar ausgebildet.

Aus dem Dokument DE 10 2005 022 926 B3 ist ein Zweiganggetriebe für einen Elektroantrieb bekannt, bei dem die zwei Gänge mittels einer Schaltwalze einund ausgelegt werden können. In eine Nut der Schaltwalze greift ferner ein Parksperrenmitnehmer, mittels dessen eine Parksperrenanordnung betätigbar ist, die nach der Art einer Schaltkupplung ausgebildet ist

Eine elektromotorisch angetriebene Parksperrenanordnung mit einem aufwändigen Hebelgestänge ist aus dem Dokument EP 0 895 908 A1 bekannt.

Weitere Parksperrenanordnungen sind bekannt aus den Dokumenten DE 100 45 953 B4, DE 10 2005 029 966 A1 sowie DE 10 2010 027 826 A1.

Schließlich ist es aus dem Dokument DE-PS 1 189 866 bekannt, eine Blockierung eines Getriebes dadurch zu erzielen, dass zwei Gangstufen eines Vorgelegegetriebes gleichzeitig eingelegt werden. Das Ein- und Auslegen der Gangstufen erfolgt hierbei über ein Schrittschaltwerk, das eine Kulissenscheibe aufweist, in der Schlitze zur Führung von Schaltgabeln ausgebildet sind.

Vor diesem Hintergrund ist es eine Aufgabe der Erfindung, eine verbesserte Parksperrenanordnung anzugeben, die insbesondere mit geringem Aufwand und/oder kostengünstig bei hoher Robustheit realisierbar ist.

Die obige Aufgabe wird durch eine Parksperrenanordnung gemäß Anspruch 1 gelöst, wobei der Winkelbereich einen ersten Winkelabschnitt aufweist, innerhalb dessen die Parksperrenklinke betätigbar ist, und einen zweiten Winkelabschnitt aufweist, innerhalb dessen die Parksperrenklinke in einer Position gehalten wird, wobei die Park-sperrenklinke innerhalb des zweiten Winkelabschnittes in der Freigabeposition gehalten wird und wobei der zweite Winkelabschnitt größer ist als der erste Winkelabschnitt.

Ferner wird die obige Aufgabe gelöst durch ein Kraftfahrzeuggetriebe mit einer Schaltanordung, die mittels wenigstens einer Schaltwalze betätigbar ist, und mit einer Parksperrenanordnung der erfindungsgemäßen Art, wobei die Schaltwalze mit der Parksperrenanordnung gekoppelt ist.

Durch die Maßnahme, die Betätigungsanordnung so auszugestalten, dass sie über einen großen Winkelbereich verdrehbar ist, der nicht nur einen ersten Winkelabschnitt zur Betätigung der Parksperrenklinke sondern einen weiteren Winkelbereich beinhaltet, innerhalb dessen die Parksperrenklinke in einer Position gehalten wird, kann die Parksperrenanordnung auch von solchen Antriebselementen betätigt werden, die an sich für andere Zwecke in dem Kraftfahrzeuggetriebe vorgesehen sind, wie beispielsweise eine Schaltwalze oder dergleichen. Demzufolge kann die Parksperrenanordnung mit einem ohnehin in dem Getriebe vorhandenen Antriebselement angetrieben werden, so dass die Parksperrenanordnung kostengünstig und mit geringer Komplexität bzw. einer geringen Anzahl von Bauteilen realisierbar ist. Zudem kann der Raumbedarf der Parksperrenanordnung hierdurch verringert werden.

Eine derartige Parksperrenanordnung kann jedoch, je nach Fahrzeuggetriebetyp, auch mittels eines eigenen Antriebes, beispielsweise eines Elektromotors, angetrieben sein. Daher ist die Parksperrenanordnung generell geeignet, in unterschiedlichen Typen von Fahrzeuggetrieben verwendet zu werden. Hierdurch kann die Kostenstruktur verbessert werden, da viele Bauteile gegebenenfalls mit höheren Stückzahlen produzierbar sind.

Die Betätigungsanordnung dient auch als eine Arretierung der Parksperrenanordnung in der Freigabeposition, so dass separate Elemente zur Arretierung nicht notwendig sind. Ferner kann ein vergleichsweise großer zweiter Winkelabschnitt bereitgestellt werden, der für Aufgaben eines Antriebes der Parksperrenanordnung reserviert ist, die nicht zur Betätigung der Parksperrenanordnung dienen (wie beispielsweise das Schalten von Gangstufen eines Getriebes).

Die Aufgabe wird somit vollkommen gelöst.

Von besonderem Vorzug ist es, wenn die erste Achse und die zweite Achse parallel zueinander ausgerichtet sind. Ferner ist es bevorzugt, wenn der zweite Winkelabschnitt größer ist als 180°, insbesondere größer als 250°. Ferner ist es bevorzugt, wenn der zweite Winkelabschnitt kleiner ist als 360°, insbesondere kleiner als 330°.

Die Betätigungsanordnung ist vorzugsweise nach der Art einer Radanordnung ausgebildet, die um die zweite Achse verdrehbar gelagert ist. Die Parksperrenklinke ist vorzugsweise um eine dritte Achse zwischen der Sperrposition und einer Freigabeposition verschwenkbar gelagert.

Ferner ist es vorteilhaft, wenn die Betätigungsanordnung einen um die zweite Achse herum angeordneten Führungsabschnitt aufweist, in dem ein Mitnehmer geführt ist, der mit der Parksperrenklinke verbunden ist.

Der Mitnehmer wird dabei im Bereich des ersten Winkelabschnittes vorzugsweise so bewegt bzw. kann so bewegt werden, dass die Sperrposition der Parksperrenklinke einrichtbar ist. Soweit der Mitnehmer innerhalb des zweiten Winkelabschnittes in dem Führungsabschnitt bewegt wird, wird die Position der Parksperrenklinke von dem Führungsabschnitt gehalten, insbesondere in der Freigabeposition.

Dabei ist es von besonderem Vorteil, wenn die Parksperrenklinke mittels des Führungsabschnittes von der Sperrposition in die Freigabeposition bewegbar ist.

Bei dieser Ausführungsform ist es möglich, die Parksperrenklinke innerhalb des zweiten Winkelabschnittes mittels des Führungsabschnittes zu arretieren. Ferner lässt sich die umgekehrte Bewegung der Parksperrenklinke in die Sperrposition mittels eines anderen Elementes realisieren.

Von besonderem Vorzug ist es dabei, wenn die Betätigungsanordnung einen Betätigungsnocken aufweist, mittels dessen die Parksperrenklinke von der Freigabeposition in die Sperrposition bewegbar ist.

Der Betätigungsnocken und der Führungsabschnitt können dabei vorzugsweise starr miteinander verbunden sein, können jedoch gegebenenfalls auch relativ zueinander beweglich ausgestaltet sein.

Insbesondere dann, wenn die erste Achse und die zweite Achse parallel zueinander angeordnet sind, ist der Führungsabschnitt vorzugsweise als eine Nut bzw. als eine Radialschulter an einem Betätigungsrad ausgebildet, vorzugsweise an einer axialen Stirnseite des Betätigungsrades.

Gemäß einer bevorzugten Ausführungsform weist die Betätigungsanordnung ein Trägerrad und ein Betätigungsrad auf, wobei das Trägerrad angetrieben ist, und wobei der Führungsabschnitt und/oder der Betätigungsnocken an dem Betätigungsrad ausgebildet ist.

Das Trägerrad und das Betätigungsrad können einstückig miteinander ausgebildet sein.

Von besonderem Vorzug ist es jedoch, wenn das Betätigungsrad koaxial zu dem Trägerrad angeordnet und zumindest in einer Drehrichtung mit dem Trägerrad über eine Drehfeder gekoppelt ist.

Bei dieser Ausführungsform ist es innerhalb des ersten Winkelabschnittes möglich, die Parksperrenanordnung mittels der Drehfeder in die Sperrposition vorzuspannen, auch wenn die Sperrklinke auf einem Zahn des Parksperrenrades aufliegt. Sobald sich das Parksperrenrad weiterdreht, gelangt die Parksperrenklinke in eine Ausnehmung des Parksperrenrades, und zwar aufgrund der Vorspannkraft der Drehfeder, so dass ein sicheres Einlegen der Sperrposition ermöglicht wird.

Das Trägerrad und/oder das Betätigungsrad können als Räder ausgebildet sein, die sich über 360° erstrecken. Generell ist es jedoch auch möglich, das Betätigungsrad und/oder das Trägerrad als Radsegmente auszubilden, die sich über einen Winkelbereich von kleiner 360°, jedoch vorzugsweise größer 120°, insbesondere größer 180° erstrecken.

Gemäß einer weiteren insgesamt bevorzugten Ausführungsform ist die Betätigungsanordnung mittels eines Elektromotors angetrieben, dessen Antriebswelle parallel zu der zweiten Achse ausgerichtet ist.

Durch diese Maßnahme wird erreicht, dass eine Betätigung der Parksperrenanordnung im Wesentlichen ohne Rotations/Translationswandier realisierbar ist. Die Drehbewegung der Antriebswelle des Elektromotors kann hierbei unmittelbar in eine Drehbewegung eines Betätigungsrades der Parksperrenanordnung umgesetzt werden, ohne dass aufwändige Hebelmechanismen oder dergleichen vorzusehen sind.

Bei dieser Ausführungsform ist es von besonderem Vorteil, wenn die Antriebswelle des Elektromotors mit einer Schaltwalze zum Betätigen von wenigstens einem Schaltelement verbunden ist, wobei die Betätigungsanordnung vorzugsweise mit der Schaltwalze verbunden ist.

Generell ist es möglich, dass die Antriebswelle über einen eigenen Abtrieb mit der Parksperrenanordnung bzw. deren Betätigungsanordnung verbunden ist. Von besonderem Vorteil ist es jedoch, wenn die Schaltwalze mit der Betätigungsanordnung verbunden ist. Zu diesem Zweck kann an der Schaltwalze eine geeignete Verzahnung oder ein sonstiges Antriebsmittel vorgesehen sein, wie ein Zahnriemenrad, ein Kettenrad oder dergleichen.

Ferner ist es generell möglich, dass die Schaltwalze hierbei direkt mit der Betätigungsanordnung verbunden ist, also beispielsweise durch einen Zahneingriff zwischen einer Verzahnung der Schaltwalze und einer Verzahnung der Betätigungsanordnung.

Von besonderem Vorzug ist es jedoch, wenn die Betätigungsanordnung mit der Schaltwalze über eine Radsatzanordnung verbunden ist.

Hierdurch lassen sich hohe Übersetzungen einstellen, so dass sich die Parksperrenanordnung mit sehr geringen Drehmomenten des Elektromotors betätigen lässt.

Insgesamt lassen sich mit der erfindungsgemäßen Parksperrenanordnung bzw. dem damit ausgestatteten Kraftfahrzeuggetriebe eine Reihe von Vorteilen erzielen, die nachstehend aufgelistet sind und - je nach Ausführungsform - einzeln oder in Kombination miteinander realisierbar sind.

Zum einen lässt sich eine integrierte, elektromechanisch betätigte Parksperrenanordnung realisieren, die nach der Art "park by wire" betätigbar ist und/oder mechanisch (beispielsweise mittels eines Wählhebels) betätigbar ist. Vorzugsweise kann eine bereits vorhandene elektromechanische Getriebeaktuatorik, wie beispielsweise eine Schaltwalze, verwendet werden. Es ergeben sich eine hohe Integrität, niedrige Kosten, eine geringe Komplexität sowie ein hohes Maß an Robustheit.

Die Verbindung der Antriebswelle mit der Betätigungsanordnung erfolgt vorzugsweise über einen Stirnradantrieb, einen Kettenantrieb, einen Zahnriemenantrieb oder dergleichen. Eine Drehbewegung der Schaltwalze führt vorzugsweise zwangsläufig zu einer Drehbewegung der Betätigungsanordnung. In einem Winkelbereich der Schaltwalze, der zur Betätigung von Schaltelementen bereitgestellt ist (zweiter Winkelabschnitt), dreht die Betätigungsanordnung frei, ohne Funktion, also ohne die Parksperrenanordnung zu betätigen. Vorzugsweise wird die Parksperrenanordnung hierbei jedoch in einer Position, insbesondere der Freigabeposition, gehalten bzw. arretiert.

Innerhalb des ersten Winkelabschnittes ist die Parksperrenanordnung in die Sperrposition verbringbar. Hierbei ist es möglich, dass ein der Schaltwalze zugeordneter Gang eingelegt bleibt oder auch ausgelegt wird. Sofern ein Gang eingelegt wird, ist dies vorzugsweise ein niedriger Gang, wie ein Rückwärtsgang oder eine erste Gangstufe.

Insbesondere, wenn die Betätigung über eine Radsatzanordnung erfolgt, ergeben sich hohe Sicherheitsreserven bezüglich der benötigten Aktuierungskräfte. Insbesondere bei einer parallelen Ausrichtung der verschiedenen Achsen ergibt sich ein hoher mechanischer Wirkungsgrad, da die Betätigung durch Verzahnungen oder dergleichen realisierbar ist. Ferner sind bei dieser Ausführungsform keine Umwandlungen von rotatorischer in translatorische Energie oder umgekehrt notwendig. Durch die Radsatzanordnung ist es vorzugsweise ferner möglich, den Verdrehbereich der Schaltwalze zum Betätigen von Schaltelementen an den zweiten Winkelabschnitt anzupassen.

Da die Parksperrenanordnung bei einer Variante an die Schaltwalze gekoppelt ist, kann die Betätigungssoftware zum Betätigen der Parkscheibe automatisch eine sicherheitstechnische Einstufung erfüllen, die bei anderen Anwendungen durch separate Programmierung erst aufwändig erprobt werden muss.

Sofern die Betätigungsanordnung mit der Schaltwalze verbunden ist, ist auch eine Kombination mit klassischen Parksperren ("Bullet-Design") möglich, insbesondere über entsprechende Umlenkmechanismen.

Zum Erkennen einer Drehposition der Betätigungsanordnung der Parksperrenanordnung ist kein separater Sensor notwendig, da ein Drehwinkelgeber (beispielsweise Inkrementalsensor) verwendet werden kann, der ohnehin der Schaltwalze zugeordnet ist.

Eine Rastierung bzw. Arretierung der Parksperrenanordnung in der Freigabeposition muss nicht separat vorgesehen werden. Diese wird vorzugsweise durch den Führungsabschnitt innerhalb des zweiten Winkelabschnittes realisiert.

Sofern die mittels der Schaltwalze betätigten Schaltelemente Synchroneinheiten aufweisen, ist es bevorzugt, wenn diese zumindest teilweise eine spitze Kupplungskörperverzahnung bzw. einen großen Kegelwinkel bzw. einen entkoppelten Kupplungskörper aufweisen, und zwar insbesondere hinsichtlich jenes Ganges, der unmittelbar benachbart zu dem ersten Winkelabschnitt angeordnet ist. Hierdurch kann die Verfügbarkeit des Ganges bezüglich des Einlegens verbessert werden.

Schließlich ist eine zusätzliche mechanische Anbindung an die Betätigungsanordnung möglich, um beispielsweise eine Notfallentriegelung zu realisieren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den durch die anhängenden Ansprüche definierten Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Querschnittsansicht eines Teils eines erfindungsgemäßen Kraftfahrzeuggetriebes mit einer erfindungsgemäßen Parksperrenanordnung gemäß einer Ausführungsform der Erfindung;
- Fig. 2: eine perspektivische Ansicht einer weiteren Ausführungsform einer erfindungsgemäßen Parksperrenanordnung von vorne;
- Fig. 3: die Parksperrenanordnung der Fig. 2 in einer perspektivischen Darstellung von hinten;
- Fig. 4: eine schematische Querschnittsansicht durch eine weitere Ausführungsform einer erfindungsgemäßen Parksperrenanordnung in einer Freigabeposition; und
- Fig. 5: die Parksperrenanordnung der Fig. 4 in einer Sperrposition.

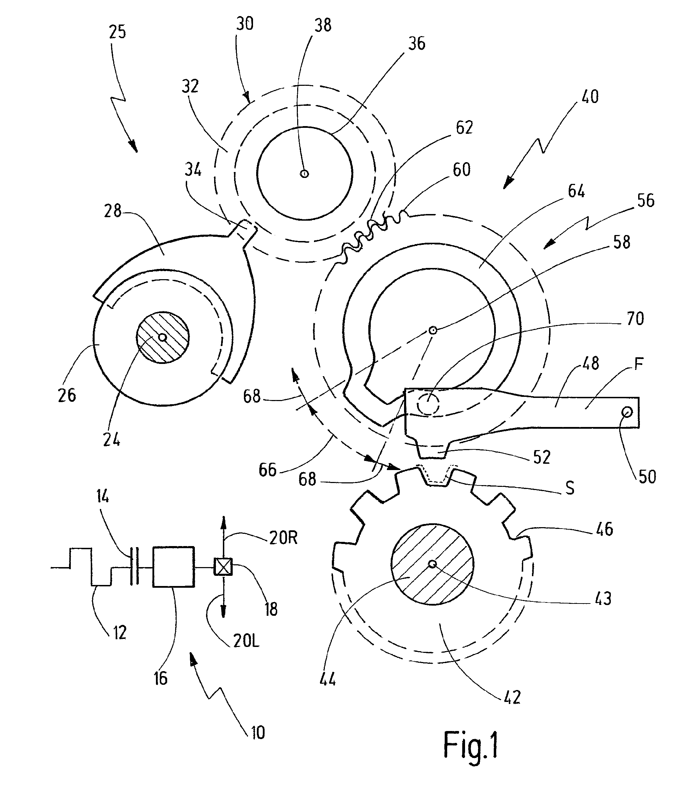

In Fig. 1 ist ein Antriebsstrang für ein Kraftfahrzeug schematisch dargestellt und generell mit 10 bezeichnet. Der Antriebsstrang 10 beinhaltet einen Antriebsmotor 12 wie einen Verbrennungsmotor sowie eine Kupplungsanordnung 14. Der Ausgang der Kupplungsanordnung 14 ist mit einem Kraftfahrzeuggetriebe 16 verbunden. Ein Ausgang des Kraftfahrzeuggetriebes 16 ist mit einem Differential 18 verbunden, das Antriebsleistung auf zwei angetriebene Räder 20L, 20R des Kraftfahrzeuges verteilt.

Das Kraftfahrzeuggetriebe 16 kann ein manuelles Schaltgetriebe, ein automatisiertes Schaltgetriebe, ein Doppelkupplungsgetriebe oder ein Wandlerautomatgetriebe, oder auch ein stufenloses Getriebe sein.

Vorliegend ist das Kraftfahrzeuggetriebe 16 als Stufengetriebe mit einer Mehrzahl von Gangstufen ausgebildet, beispielsweise mit sechs, sieben oder mehr Vorwartsgangstufen und wenigstens einer Rückwärtsgangstufe. Die Gangstufen des Kraftfahrzeuggetriebes 16 lassen sich mittels einer in Fig. 1 schematisch angedeuteten Schaltanordung 25 ein- und auslegen. Dabei ist zumindest eine Schaltmuffe 26 der Schaltanordung 25 an einer ersten Getriebewelle 24 axial verschieblich gelagert. Die Schaltmuffe 26 ist mit einem Schaltglied 28 wie einer Schaltgabel gekoppelt. Die Schaltanordung 25 beinhaltet ferner eine Schaltwalze 30, die eine schematisch angedeutete Schaltnut 32 aufweist. Ein Schaltgliedmitnehmer 34 des Schaltgliedes 28 ist in der Schaltnut 32 geführt. Die Schaltwalze 30 ist mittels eines Elektromotors 36 antreibbar, der eine Antriebswelle 38 aufweist. Vorliegend ist der Elektromotor 36 koaxial zu der Schaltwalze 30 angeordnet, kann jedoch auch über einen Radsatz oder dergleichen mit der Schaltwalze 30 gekoppelt sein. Die Antriebswelle 38 ist vorzugsweise parallel zu der ersten Getriebewelle 24 ausgerichtet.

Durch Ansteuern des Elektromotors 36 kann die Schaltwalze 30 verdreht werden, wodurch der Schaltgliedmitnehmer 34 in axialer Richtung (senkrecht zur Zeichnungsebene) versetzt wird, um eine oder zwei Gangstufen ein- und auszulegen. Es versteht sich, dass das Kraftfahrzeuggetriebe 16 vorzugsweise eine Mehrzahl derartiger Schaltglieder beinhaltet, von denen eines oder mehrere mittels einer Schaltwalze 30 betätigt werden können. Ferner kann das Kraftfahrzeuggetriebe zwei Schaltwalzen 30 aufweisen, die jeweils unterschiedlichen Gängen zugeordnet sind. Bei einem Doppelkupplungsgetriebe kann beispielsweise eine Schaltwalze geraden Gangstufen und die andere Schaltwalze ungeraden Vorwärtsgangstufen zugeordnet sein.

Das Kraftfahrzeuggetriebe 16 beinhaltet ferner eine Parksperrenanordnung 40. Die Parksperrenanordnung 40 weist ein Parksperrenrad 42 auf, das um eine erste Achse 43 verdrehbar gelagert ist. Die erste Achse 43 ist vorzugsweise parallel zu der Antriebswelle 38 ausgerichtet. Das Parksperrenrad 42 ist mit einer zweiten Getriebewelle 44 (oder mit der ersten Getriebewelle 24) starr verbunden, wobei es sich bei dieser Getriebewelle vorzugsweise um eine direkt mit dem Ausgang des Kraftfahrzeuggetriebes 16 verbundene Welle handelt, so dass ein Sperren des Parksperrenrades 42 unmittelbar ein Blockieren der angetriebenen Räder 20L, 20R zur Folge hat.

Das Parksperrenrad 42 ist an seinem Außenumfang mit einer Außenverzahnung 46 versehen. Die Parksperrenanordnung 40 beinhaltet ferner eine Parksperrenklinke 48, die um eine Klinkenachse 50 herum verschwenkbar gelagert ist. Die Klinkenachse 50 ist vorzugsweise parallel zu der ersten Achse 43 und/oder vorzugsweise parallel zu der Antriebswelle 38 ausgerichtet. An der Klinkenachse 50 ist ein Sperrzahn 52 ausgebildet, der in einer gestrichelt angedeuteten Sperrposition S der Parksperrenanordnung 40 in eine Zahnlücke der Außenverzahnung 46 greift. In der in durchgezogenen Linien gezeigten Freigabeposition F ist die Parksperrenklinke 48 aus dem Eingriffsbereich der Außenverzahnung 46 herausgeschwenkt, so dass der Sperrzahn 52 nicht in die Außenverzahnung 46 eingreift.

Zur Betätigung der Parksperrenklinke 48 ist eine Betätigungsanordnung 56 vorgesehen. Die Betätigungsanordnung 56 ist vorliegend nach der Art eines Betätigungsrades ausgebildet, das um eine zweite Achse 58 herum verdrehbar gelagert ist. Das Betätigungsrad weist an seinem Außenumfang eine Außenverzahnung 60 auf, die mit einer Schaltwalzenverzahnung 62 der Schaltwalze 30 in Eingriff steht. Die Schaltwalzenverzahnung 62 kann beispielsweise in axialer Richtung benachbart zu der Schaltnut 32 vorgesehen sein. Die Betätigungsanordnung 56 ist folglich zwangsweise mit der Schaltwalze 30 drehgekoppelt, derart, dass eine Drehbewegung der Schaltwalze 30 immer eine Drehbewegung des Betätigungsrades der Betätigungsanordnung 56 zur Folge hat. Anstelle eines Verzahnungseingriffes kann diese direkte Verbindung auch über eine Kette, einen Zahnriemen oder dergleichen erfolgen.

An dem Betätigungsrad der Betätigungsanordnung 56 ist ein sich um die zweite Achse 58 herum erstreckender Führungsabschnitt 64 ausgebildet. Dieser kann beispielsweise durch eine Nut gebildet sein, die in einer axialen Stirnseite des Betätigungsrades vorgesehen ist. Der Führungsabschnitt 64 erstreckt sich vorliegend über 360°, kann sich jedoch auch um einen kleineren Winkelbereich erstrecken. Dieser Winkelbereich bestimmt das Maß der Verdrehbarkeit des Betätigungsrades. Der Winkelbereich ist vorliegend in einen ersten Winkelabschnitt 66 und einen zweiten Winkelabschnitt 68 unterteilt, wobei die Summe der Winkelabschnitte vorliegend 360° beträgt. Die Summe der Winkelabschnitte 66, 68 kann jedoch auch kleiner als 360° sein, ist jedoch vorzugsweise größer als 180°, insbesondere größer als 275°.

Der erste Winkelabschnitt 66 ist der Betätigung der Parksperrenanordnung 40 zugeordnet. Der zweite Winkelabschnitt 68 ist der Betätigung von Gangstufen der Schaltwalze 30 zugeordnet. Innerhalb des zweiten Winkelabschnittes 68 wird die Parksperrenklinke 48 in einer Position gehalten. Im vorliegenden Fall handelt es sich hierbei um die Freigabeposition F, wie dargestellt. Die Parksperrenklinke 48 weist einen Mitnehmer 70 auf, der sich in axialer Richtung erstreckt und in den Führungsabschnitt 64 greift. Bei Bewegungen innerhalb des zweiten Winkelabschnittes 68 wird die Parksperrenklinke 48 folglich in der Freigabeposition F gehalten, so dass eine Arretierung nicht notwendig ist. Innerhalb des zweiten Winkelabschnittes kann die Schaltwalze 30 folglich verdreht werden, ohne dass die Parksperrenanordnung in die Sperrposition gelangt. Bei einer Drehbewegung des Betätigungsrades der Betätigungsanordnung 56, bei der der Mitnehmer 70 von dem zweiten Winkelabschnitt 68 in den ersten Winkelabschnitt 66 übertritt, wird der Mitnehmer 70 von einem nicht näher bezeichneten Nocken am Innenumfang des Führungsabschnittes 64 radial von der zweiten Achse 58 nach außen weggedrückt, so dass die Parksperrenklinke 48 von der Freigabeposition F in die Sperrposition S bewegt wird. Bei einem Übergang des Mitnehmers 70 von dem ersten Winkelabschnitt 66 in den zweiten Winkelabschnitt 68 wird der Mitnehmer von einem Außenumfangsabschnitt des Führungsabschnittes 64 radial nach innen gezogen, so dass die Parksperrenklinke 48 von der Sperrposition S wieder zurück in die Freigabeposition F gelangt.

Der Mitnehmer 70 kann starr mit der Parksperrenklinke 48 verbunden sein, kann jedoch auch über eine Federanordnung mit der Parksperrenklinke 48 gekoppelt sein, derart, dass eine Bewegung des Mitnehmers 70 in den ersten Winkelabschnitt 66 hinein auch dann möglich ist, wenn der Sperrzahn 52 oberhalb eines Zahnes der Außenverzahnung 46 liegt. Erst bei einem Weiterdrehen des Parksperrenrades 42 würde die Parksperrenklinke 48 dann über diese Federanordnung in Richtung hin zu dem Parksperrenrad 42 gedrückt werden, um die Sperrposition S einzurichten.

Ferner kann in die Parksperrenanordnung 40 eine Arretierungsfunktion zum Arrretieren oder selbsthaltenden Festlegen der Parksperrenklinke 48 in der Sperrposition S ausgebildet sein.

Vorliegend wird zum Betätigen der Parksperrenanordnung 40 ein in dem Kraftfahrzeuggetriebe 16 ohnehin vorhandenes Aktuierungselement genutzt, nämlich der Elektromotor 36 zum Betätigen der Schaltwalze 30. Dabei ist die Abtriebswelle 38 des Elektromotors 36 und/oder die Schaltwalze 30 zwangsweise mit der Betätigungsanordnung 56 gekoppelt. Durch die Unterteilung des Führungsabschnittes 64 in den ersten Winkelabschnitt 66 und den zweiten Winkelabschnitt 68 kann dabei die Schaltwalze 30 zum Ein- und Auslegen von Gangstufen bewegt werden, ohne dass die Parksperrenanordnung 40 in die Sperrposition S betätigt wird. Über den Führungsabschnitt 64 kann sogar die Arretierung der Parksperrenklinke 48 in der Freigabeposition F erreicht werden, ohne dass separate Arretierungsmittel notwendig sind. Wenn die Schaltwalze 30 so bewegt wird, dass der Mitnehmer 70 in den ersten Winkelabschnitt 66 gelangt, wird die Parksperrenanordnung 40 in die Sperrposition S betätigt. Hierbei ist es möglich, dass eine vorab eingelegte Gangstufe wie beispielsweise eine Rückwärtsgangstufe oder eine erste Gangstufe eingelegt bleibt oder aber vorab ausgelegt wird. Durch die parallele Ausrichtung der Antriebswelle 38 bzw. der Schaltwalze 30, der zweiten Achse 58 sowie der Klinkenachse 50 ist es möglich, die Parksperrenanordnung 40 ohne jegliche Rotations/Translations-Wandler oder Translations/Rotations-Wandler zu realisieren. Demzufolge ergibt sich ein hoher Wirkungsgrad und ein kompakter Aufbau. Generell ist die Gesamtlösung robust und weist nur eine geringe Komplexität auf, wodurch die Kosten der Parksperrenanordnung 40 niedrig sind.

Der zweite Winkelabschnitt 68 ist vorzugsweise größer als der erste Winkelabschnitt 66, und ist insbesondere größer als 180°, vorzugsweise größer als 250°. Der zweite Winkelabschnitt 68 ist vorzugsweise kleiner als 360°, insbesondere kleiner als 320°. Der erste Winkelabschnitt 66 ist vorzugsweise größer als 5° und vorzugsweise kleiner als 90°, insbesondere kleiner als 45°.

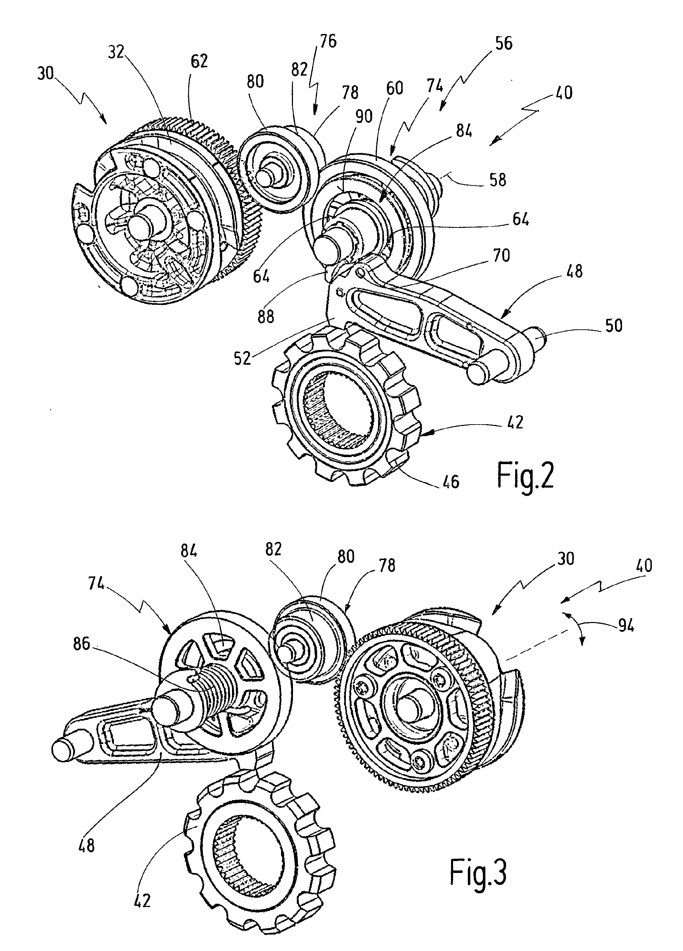

In den nachfolgenden Fig. 2 bis 5 werden weitere Ausführungsformen von Parksperrenanordnungen beschrieben, die hinsichtlich Aufbau und Funktionsweise der Parksperrenanordnung 40 der Fig. 1 entsprechen. Gleiche Elemente sind daher durch gleiche Bezugszeichen gekennzeichnet. Im Folgenden werden im Wesentlichen die Unterschiede erläutert.

Bei der in Fig. 2 und 3 gezeigten Parksperrenanordnung 40 weist die Betätigungsanordnung 56 ein Trägerrad 74 auf, an dessen Außenumfang die Außenverzahnung 60 ausgebildet ist. Ferner ist das Trägerrad 74 mit der Schaltwalze 30 über eine Radsatzanordnung 76 gekoppelt. Die Radsatzanordnung 76 weist ein Zwischenrad 78 mit einer ersten Verzahnung 80 und einer zweiten Verzahnung 82 auf. Die erste Verzahnung 80 steht in Eingriff mit der Schaltwalzenverzahnung 62. Die zweite Verzahnung 82 steht in Eingriff mit der Außenverzahnung 60 des Trägerrades 72. Durch die Radsatzanordnung 76 lässt sich eine hohe Übersetzung einstellen, so dass die Park-sperrenanordnung mit kleinen Antriebsmomenten des Elektromotors 36 betätigbar ist. Beispielsweise kann das von dem Elektromotor 36 aufgebrachte Drehmoment mittels der eingestellten Übersetzung auf das wenigstens 20-fache, insbesondere wenigstens 50-fache Moment zum Herausziehen der Parksperrenklinke 48 aus der Sperrposition S erhöht werden.

Die Betätigungsanordnung 56 weist ferner ein Betätigungsrad 84 auf, das koaxial zu dem Trägerrad 74 angeordnet und begrenzt verdrehbar gegenüber diesem gelagert ist. Das Betätigungsrad 84 ist über eine Drehfeder 86 (siehe Fig. 3) mit dem Trägerrad 84 gekoppelt. Hierdurch kann das Trägerrad 74 in eine Position verdreht werden, bei der der Sperrzahn oberhalb eines Zahnes der Außenverzahnung 46 des Parksperrenrades 42 liegt, wobei in diesem Fall die Drehfeder 86 gespannt wird, da sich das Betätigungsrad 84 hierbei nicht mit bewegen kann. Sobald das Parksperrenrad 42 dann weiterbewegt wird, wird die Parksperrenklinke 48 mittels der Vorspannkraft der Drehfeder 86 in die Sperrposition S verbracht.

An dem Betätigungsrad 84 ist ferner ein Betätigungsnocken 88 ausgebildet. Dieser greift an einer längsseitigen Endfläche der Parksperrenklinke 48 an. In Fig. 2 ist der Betätigungsnocken 88 in einer Position kurz vor dem ersten Winkelbereich 66 gezeigt, bei der die Parksperrenklinke 48 sich noch in der Freigabeposition F befindet. Ein Weiterdrehen des Betätigungsnockens 88 im Uhrzeigersinn führt zu einem Verschwenken der Parksperrenklinke 48 in die Sperrposition S.

Der Führungsabschnitt 64 ist bei dieser Ausführungsform ebenfalls an dem Betätigungsrad 84 ausgebildet. Der Führungsabschnitt 64 erstreckt sich über einen Winkelbereich von größer 300°. Der Führungsabschnitt 64 weist dabei eine axiale Ausnehmung nach der Art einer Nut auf, deren Außenumfangsabschnitt 90 an dem Mitnehmer 70 angreift, um die Parksperrenklinke 48 von der Sperrposition S in die Freigabeposition F zu ziehen und innerhalb des zweiten Winkelabschnittes 68 in der Freigabeposition F zu halten.

In Fig. 3 ist ferner schematisch dargestellt, dass die Parksperrenanordnung 40 gegebenenfalls auch mechanisch notentriegelt werden kann, wozu ein Notentriegelungsmechanismus 94 vorgesehen ist. Dieser kann von einer Stelle im Motorraum aus betätigt werden. Sofern die Parksperrenanordnung 40 auch eine Funktion im Rahmen einer Wegfahrsperre aufweisen soll, ist es bevorzugt, wenn ein Betätigungsorgan zum Betätigen des Notentriegelungsmechanismus 94 im Innenraum des Kraftfahrzeuges angeordnet ist.

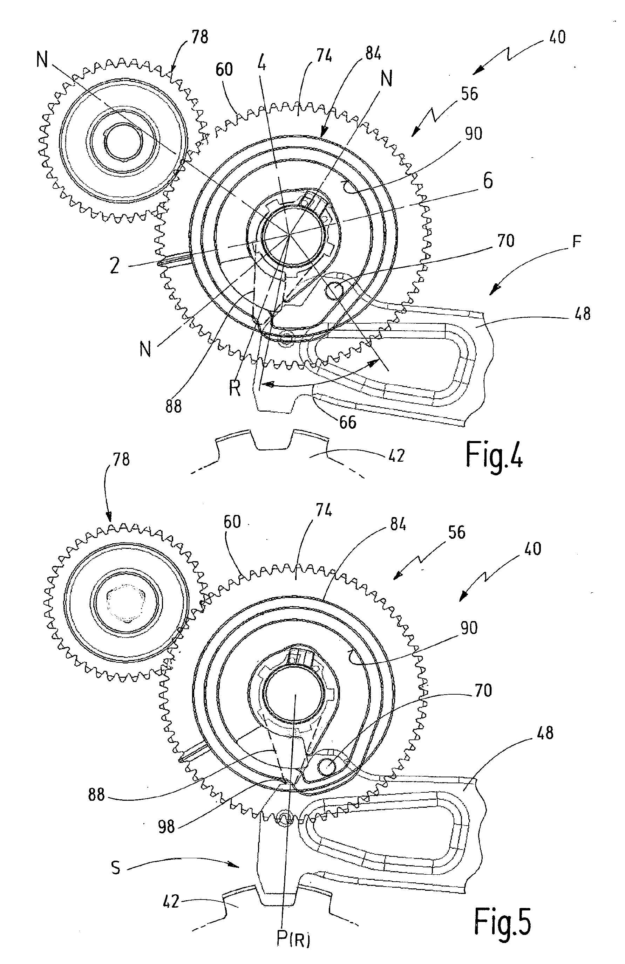

In den Fig. 4 und 5 ist eine weitere Ausführungsform einer Parksperrenanordnung gezeigt, die hinsichtlich Aufbau und Funktionsweise generell der Parksperrenanordnung der Fig. 2 und 3 entspricht. Gleiche Elemente sind daher durch gleiche Bezugszeichen gekennzeichnet.

In Fig. 4 ist dabei der Betätigungsnocken 88 in einer Position kurz vor dem ersten Winkelabschnitt 66 gezeigt. Diese Position ist im vorliegenden Fall einer Rückwärtsgangstufe R des Kraftfahrzeuggetriebes 16 zugeordnet. Mit anderen Worten ist in dieser Position der Rückwärtsgang eingelegt. Ein Verdrehen der Schaltwalze 30 derart, dass das Betätigungsrad 84 entgegen Uhrzeigerrichtung bewegt wird, führt zunächst zu einem Einlegen einer Neutralstufe, bei der keine Gangstufe eingelegt wird. Daran schließt sich eine Position für die Gangstufe 2 an. Hieran schließt sich wieder eine Neutralstufe an. Hiernach schließt sich die Gangstufe 4 an. Hieran schließt sich wiederum eine Neutralposition N an. Hieran schließt sich dann eine Drehposition für die Gangstufe 6 an. Der hierdurch innerhalb des zweiten Winkelabschnittes 68 überdeckte Bereich ist größer als 180°. Innerhalb des ersten Winkelabschnittes 66 wird die Parksperrenklinke 48 mittels des Betätigungsnockens 88 in die Sperrposition S gedrückt, wobei der Betätigungsnocken 88 in der in Fig. 5 gezeigten Sperrposition S auf einer Schulter 98 der Parksperrenklinke 48 aufliegt, so dass eine Selbsthaltung für die Sperrposition S realisiert wird, bei der keine Kräfte durch den Elektromotor 36 aufzubringen sind. Zum Lösen der Parksperrenanordnung 40 wird der Betätigungsnocken 88 dann wieder entgegen Uhrzeigerrichtung zum einlegen der Rückwärtsgangstufe bewegt. Da folglich das Lösen der Parksperrenanordnung 40 mit einem Einlegen einer benachbarten Gangstufe einhergehen kann, sind Verzahnungen und sonstige Parameter einer entsprechenden Synchronisierungseinrichtung so ausgebildet, dass eine Blockierung beim Einlegen dieser Gangstufe während des Stillstandes verhindert werden kann, insbesondere als spitze Verzahnungen an Schaltmuffe und/oder Kupplungskörper.

Es versteht sich, dass an dem Außenumfangsabschnitt 90 des Führungsabschnittes 64 und/oder an einem Innenumfangsabschnitt hiervon eine Gleitbeschichtung vorgesehen sein kann, um den Reibungswiderstand gering zu halten, wenn der Mitnehmer 70 innerhalb des ersten und/oder des zweiten Winkelabschnittes 66, 68 geführt wird.

## Patentansprüche

1. Parksperrenanordnung (40) für ein Kraftfahrzeuggetriebe (16), mit einem um eine erste Achse (43) drehbar gelagerten Parksperrenrad (42), mit einer zwischen einer Sperrposition (S) und einer Freigabeposition (F) beweglich gelagerten Park-sperrenklinke (48) und mit einer die Parksperrenklinke (48) betätigenden Betätigungsanordnung (56), die um eine zweite Achse (58) über einen Winkelbereich verdrehbar gelagert ist, wobei der Winkelbereich einen ersten Winkelabschnitt (66) aufweist, innerhalb dessen die Parksperrenklinke (48) betätigbar ist, und einen zweiten Winkelabschnitt (68) aufweist, innerhalb dessen die Parksperrenklinke (48) in einer Position gehalten wird, und wobei die Parksperrenklinke (48) innerhalb des zweiten Winkelabschnittes (68) in der Freigabeposition (F) gehalten wird,
**dadurch gekennzeichnet, dass** der zweite Winkelabschnitt (68) größer ist als der erste Winkelabschnitt (66).

2. Parksperrenanordnung nach Anspruch 1, **dadurch gekennzeichnet, dass** die Betätigungsanordnung (56) einen um die zweite Achse (58) herum angeordneten Führungsabschnitt (64) aufweist, in dem ein Mitnehmer (70) geführt ist, der mit der Parksperrenklinke (48) verbunden ist.

3. Parksperrenanordnung nach Anspruch 2, **dadurch gekennzeichnet, dass** die Park-sperrenklinke (48) mittels des Führungsabschnittes (64) von der Sperrposition (S) in die Freigabeposition (F) bewegbar ist.

4. Parksperrenanordnung nach einem der Ansprüche 1 bis 3, **dadurch gekennzeichnet, dass** die Betätigungsanordnung (56) einen Betätigungsnocken (88) aufweist, mittels dessen die Parksperrenklinke (48) von der Freigabeposition (F) in die Sperrposition (S) bewegbar ist.

5. Parksperrenanordnung nach einem der Ansprüche 2 bis 4, **dadurch gekennzeichnet, dass** die Betätigungsanordnung (56) ein Trägerrad (74) und ein Betätigungsrad (84) aufweist, wobei das Trägerrad (74) angetrieben ist und wobei der Führungsabschnitt (64) und/oder der Betätigungsnocken (88) an dem Betätigungsrad (84) ausgebildet ist.

6. Parksperrenanordnung nach Anspruch 5, **dadurch gekennzeichnet, dass** das Betätigungsrad (84) koaxial zu dem Trägerrad (74) angeordnet und zumindest in einer Drehrichtung mit dem Trägerrad (74) über eine Drehfeder (86) gekoppelt ist.

7. Parksperrenanordnung nach einem der Ansprüche 1 bis 6, **dadurch gekennzeichnet, dass** die Betätigungsanordnung (56) mittels eines Elektromotors (36) angetrieben ist, dessen Antriebswelle (38) parallel zu der zweiten Achse (58) ausgerichtet ist.

8. Parksperrenanordnung nach Anspruch 7, **dadurch gekennzeichnet, dass** die Antriebswelle (38) des Elektromotors (36) mit einer Schaltwalze (30) zum Betätigen von wenigstens einem Schaltelement (26) verbunden ist, wobei die Betätigungsanordnung (56) vorzugsweise mit der Schaltwalze (30) verbunden ist.

9. Parksperrenanordnung nach Anspruch 8, **dadurch gekennzeichnet, dass** die Betätigungsanordnung (56) mit der Schaltwalze (30) über eine Radsatzanordnung (76) verbunden ist.

10. Kraftfahrzeuggetriebe (16) mit einer Schaltanordnung (25), die mittels wenigstens einer Schaltwalze (30) betätigbar ist, und mit einer Parksperrenanordnung (40) nach einem der Ansprüche 1 bis 9, wobei die Schaltwalze (30) mit der Parksperrenanordnung (40) gekoppelt ist.

## Claims

1. Parking-lock arrangement (40) for a motor-vehicle transmission (16), having a parking-lock wheel (42) which is mounted such that it can be rotated about a first axis (43), having a parking-lock pawl (48) which is mounted such that it can be moved between a locking position (S) and a release position (F) and having an actuating arrangement (56) which actuates the parking-lock pawl (48) and is mounted such that it can be rotated about a second axis (58) over an angular range, wherein the angular range has a first angular section (66), within which the parking-lock pawl (48) can be actuated, and a second angular section (68), within which the parking-lock pawl (48) is held in a position, and wherein the parking-lock pawl (48) is held in the release position (F) within the second angular section (68),
**characterized in that** the second angular section (68) is greater than the first angular section (66).

2. Parking-lock arrangement according to Claim 1, **characterized in that** the actuating arrangement (56) has a guide section (64) which is arranged around the second axis (58) and in which a driver (70) is guided which is connected to the parking-lock pawl (48).

3. Parking-lock arrangement according to Claim 2, **characterized in that** the parkinglock pawl (48) can be moved by means of the guide section (64) from the locking position (S) into the release position (F).

4. Parking-lock arrangement according to one of Claims 1 to 3, **characterized in that** the actuating arrangement (56) has an actuating cam (88), by means of which the parking-lock pawl (48) can be moved from the release position (F) into the locking position (S).

5. Parking-lock arrangement according to one of Claims 2 to 4, **characterized in that** the actuating arrangement (56) has a carrier wheel (74) and an actuating wheel (84), the carrier wheel (74) being driven and the guide section (64) and/or the actuating cam (88) being formed on the actuating wheel (84).

6. Parking-lock arrangement according to Claim 5, **characterized in that** the actuating wheel (84) is arranged coaxially with respect to the carrier wheel (74) and is coupled to the carrier wheel (74) at least in one rotational direction via a torsion spring (86).

7. Parking-lock arrangement according to one of Claims 1 to 6, **characterized in that** the actuating arrangement (56) is driven by means of an electric motor (36), the drive shaft (38) of which is oriented parallel to the second axis (58).

8. Parking-lock arrangement according to Claim 7, **characterized in that** the drive shaft (38) of the electric motor (36) is connected to a gear-shifting drum (30) for actuating at least one shifting element (26), the actuating arrangement (56) preferably being connected to the gear-shifting drum (30).

9. Parking-lock arrangement according to Claim 8, **characterized in that** the actuating arrangement (56) is connected to the gear-shifting drum (30) via a wheel-set arrangement (76).

10. Motor-vehicle transmission (16) having a shifting arrangement (25) which can be actuated by means of at least one gear-shifting drum (30), and having a parking-lock arrangement (40) according to one of Claims 1 to 9, the gear-shifting drum (30) being coupled to the parking-lock arrangement (40).

## Revendications

1. Ensemble de verrouillage de stationnement (40) pour une transmission de véhicule automobile (16), comprenant une roue de verrouillage de stationnement (42) montée de manière à pouvoir tourner autour d'un premier axe (43), avec un cliquet de verrouillage de stationnement (48) supporté de manière déplaçable entre une position de verrouillage (S) et une position de libération (F) et avec un ensemble d'actionnement (56) actionnant le cliquet de verrouillage de stationnement (48), qui est supporté de manière à pouvoir tourner autour d'un deuxième axe (58) sur une plage angulaire, la plage angulaire présentant un premier intervalle angulaire (66) à l'intérieur duquel le cliquet de verrouillage de stationnement (48) peut être actionné et un deuxième intervalle angulaire (68) à l'intérieur duquel le cliquet de verrouillage de stationnement (48) est maintenu dans une position, et le cliquet de verrouillage de stationnement (48) étant maintenu à l'intérieur du deuxième intervalle angulaire (68) dans la position de libération (F),
**caractérisé en ce que** le deuxième intervalle angulaire (68) est supérieur au premier intervalle angulaire (66).

2. Ensemble de verrouillage de stationnement selon la revendication 1, **caractérisé en ce que** l'ensemble d'actionnement (56) présente une portion de guidage (64) disposée autour du deuxième axe (58), dans laquelle est guidé un dispositif d'entraînement (70) qui est connecté au cliquet de verrouillage de stationnement (48).

3. Ensemble de verrouillage de stationnement selon la revendication 2, **caractérisé en ce que** le cliquet de verrouillage de stationnement (48) peut être déplacé au moyen de la portion de guidage (64) de la position de verrouillage (S) dans la position de libération (F).

4. Ensemble de verrouillage de stationnement selon l'une quelconque des revendications 1 à 3, **caractérisé en ce que** l'ensemble d'actionnement (56) présente une came d'actionnement (88) au moyen de laquelle le cliquet de verrouillage de stationnement (48) peut être déplacé de la position de libération (F) dans la position de verrouillage (S).

5. Ensemble de verrouillage de stationnement selon l'une quelconque des revendications 2 à 4, **caractérisé en ce que** l'ensemble d'actionnement (56) présente une roue de support (74) et une roue d'actionnement (84), la roue de support (74) étant entraînée et la portion de guidage (64) et/ou la came d'actionnement (88) étant réalisées sur la roue d'actionnement (84).

6. Ensemble de verrouillage de stationnement selon la revendication 5, **caractérisé en ce que** la roue d'actionnement (84) est disposée coaxialement par rapport à la roue de support (74) et est accouplée au moins dans un sens de rotation à la roue de support (74) par le biais d'un ressort de torsion (86).

7. Ensemble de verrouillage de stationnement selon l'une quelconque des revendications 1 à 6, **caractérisé en ce que** l'ensemble d'actionnement (56) est entraîné au moyen d'un moteur électrique (36) dont l'arbre d'entraînement (38) est orienté parallèlement au deuxième axe (58).

8. Ensemble de verrouillage de stationnement selon la revendication 7, **caractérisé en ce que** l'arbre d'entraînement (38) du moteur électrique (36) est connecté à un cylindre de commutation (30) pour l'actionnement d'au moins un élément de commutation (26), l'ensemble d'actionnement (56) étant de préférence connecté au cylindre de commutation (30).

9. Ensemble de verrouillage de stationnement selon la revendication 8, **caractérisé en ce que** l'ensemble d'actionnement (56) est connecté au cylindre de commutation (30) par le biais d'un ensemble de jeu de roues (76).

10. Transmission de véhicule automobile (16) comprenant un ensemble de commutation (25) qui peut être actionné au moyen d'au moins un cylindre de commutation (30) et comprenant un ensemble de verrouillage de stationnement (40) selon l'une quelconque des revendications 1 à 9, le cylindre de commutation (30) étant accouplé à l'ensemble de verrouillage de stationnement (40).
